# EUROPEAN PATENT APPLICATION

(11) **EP 3 904 621 A1**
(43) Date of publication of application: **03.11.2021**
(21) Application number: 19905632.6
(22) Date of filing: 27.12.2019
(51) Int. Cl.: E04G 21/14, G06F 30/10, G06F 30/13

(54) **CONSTRUCTION MATERIAL ARRANGEMENT PROCESSING DEVICE, CONSTRUCTION MATERIAL ARRANGEMENT METHOD, AND PROGRAM**

(30) Priority: 28.12.2018 JP 2018247977
(71) Applicant: MITSUBISHI CHEMICAL HOLDINGS CORPORATION, Tokyo 100-8251 (JP)
(72) Inventor: OKADA, Satoru, Tokyo 100-8251 (JP); SHIRAKURA, Yosuke, Tokyo 100-8251 (JP); ICHIKAWA, Naoko, Tokyo 100-8251 (JP)
(74) Representative: Hoffmann Eitle
(86) International application number: PCT/JP2019/051407
(87) International publication number: WO 2020/138416

(57) **Abstract**

A construction material arrangement processing device includes a first acquirer configured to acquire target surface data from a storage storing three-dimensional data including a plurality of target surfaces that are targets to which a construction material is to be attached, a receptioner configured to receive information regarding dimensions designated as reference dimensions of the construction material to be attached to the target surfaces, an arrangement information generator configured to generate arrangement information regarding the number, dimensions, and arrangement of the construction material to be arranged on the plurality of target surfaces according to predetermined arrangement rules on the basis of the three-dimensional data and the designated dimensions, and an output configured to output the arrangement information generated by the arrangement information generator, in which the arrangement information generator generates the arrangement information in which a specific construction material that is attached over a first target surface and a second target surface out of the plurality of target surfaces and has a specific shape and dimensions is arranged at a protruding corner and/or a recessed corner between the first target surface and the second target surface.

## Description

### [Technical Field]

The present invention relates to a construction material arrangement processing device, a construction material arrangement method, and a program.

Priority is claimed on Japanese Patent Application No. 2018-247977, filed December 28, 2018, the content of which is incorporated herein by reference.

### [Background Art]

Construction materials are attached to inner wall surfaces, an outer wall surfaces, floors, and ceilings of a building in order to improve the designability of the building and ensure the strength thereof. In the related art, there is a technique in which dimensions or allocation of a construction material is determined in accordance with the shape or dimensions of a construction surface to which the construction material is attached on the basis of a design drawing of a building. For example, Patent Document 1 discloses a technique in which a construction material is allocated to an outer wall surface of a house on a construction image according to a predetermined allocation method, and an allocation result is output.

### [Citation List]

### [Patent Document]

[Patent Document 1] Japanese Unexamined Patent Application, First Publication No. 2005-285069

### [Summary of Invention]

### [Technical Problem]

However, the technique disclosed in Patent Document 1 is a technique for allocating a construction material to each surface among outer wall surfaces of a building, and the construction material cannot be allocated to a portion over a plurality of surfaces.

The present invention has been made in view of the circumstances, and an object thereof is to provide a construction material arrangement processing device, a construction material arrangement method, and a program capable of allocating a construction material to a portion over a plurality of surfaces.

### [Solution to Problem]

The present invention has been made to solve the problem, and, according to an aspect of the present invention, there is provided a construction material arrangement processing device including a first acquirer configured to acquire target surface data from a storage storing three-dimensional data including a plurality of target surfaces that are targets to which a construction material is to be attached; a receptioner configured to receive information regarding dimensions designated as reference dimensions of the construction material to be attached to the target surfaces; an arrangement information generator configured to generate arrangement information regarding the number, dimensions, and arrangement of the construction material to be arranged on the plurality of target surfaces according to predetermined arrangement rules on the basis of the three-dimensional data and the designated dimensions; and an output configured to output the arrangement information generated by the arrangement information generator, in which the arrangement information generator generates the arrangement information in which a specific construction material that is attached over a first target surface and a second target surface out of the plurality of target surfaces and has a specific shape and dimensions is arranged at a protruding corner and/or a recessed corner between the first target surface and the second target surface.

According to another aspect of the present invention, there is provided a construction material arrangement method in a construction material arrangement processing device, including causing a first acquirer to acquire target surface data from a storage storing three-dimensional data including a plurality of target surfaces that are targets to which a construction material is to be attached; causing a receptioner to receive information regarding dimensions designated as reference dimensions of the construction material to be attached to the target surfaces; causing an arrangement information generator to generate arrangement information regarding the number, dimensions, and arrangement of the construction material to be arranged on the plurality of target surfaces according to predetermined arrangement rules on the basis of the three-dimensional data and the designated dimensions, and generate the arrangement information in which a specific construction material that is attached over a first target surface and a second target surface out of the plurality of target surfaces and has a specific shape and dimensions is arranged at a protruding corner and/or a recessed corner between the first target surface and the second target surface; and causing an output to output the generated arrangement information.

According to still another aspect of the present invention, there is provided a program causing a computer to execute acquiring target surface data from a storage storing three-dimensional data including a plurality of target surfaces that are targets to which a construction material is to be attached; receiving information regarding dimensions designated as reference dimensions of the construction material to be attached to the target surfaces; generating arrangement information regarding the number, dimensions, and arrangement of the construction material to be arranged on the plurality of target surfaces according to predetermined arrangement rules on the basis of the three-dimensional data and the designated dimensions, and generating the arrangement information in which a specific construction material that is attached over a first target surface and a second target surface out of the plurality of target surfaces and has a specific shape and dimensions is arranged at a protruding corner and/or a recessed corner between the first target surface and the second target surface; and outputting the generated arrangement information.

### [Advantageous Effects of Invention]

According to the present invention, it is possible to allocate a construction material to a portion over a plurality of surfaces.

### [Brief Description of Drawings]

Fig. 1 is a diagram illustrating an outline of a design and construction assistance system according to an embodiment.
Fig. 2 is a diagram illustrating definition of terms related to arrangement of construction material panels in the embodiment.
Fig. 3 is a block diagram illustrating an example of a configuration of a construction material arrangement processing device according to the embodiment.
Fig. 4 is a diagram illustrating an example of construction material panel information.
Fig. 5 is a diagram showing an example of a material configuration of the construction material panel.
Fig. 6 is a diagram illustrating an example of reference data.
Fig. 7 is a diagram illustrating an example of a method of arranging a face panel module on a target surface.
Fig. 8 is a diagram illustrating an example in which construction material panels are arranged on a 2D target surface.
Fig. 9 is a diagram illustrating an example in which construction material panels are arranged on a 3D target surface.
Fig. 10A is a diagram illustrating an example of an operation screen for receiving input information from a user.
Fig. 10B is a diagram illustrating examples of dimensions of a construction material panel that are selectable on the operation screen.
Fig. 11 is a flowchart illustrating a first example of a construction material arrangement process according to the embodiment.
Fig. 12 is a flowchart illustrating a second example of a construction material arrangement process according to the embodiment.
Fig. 13 is a flowchart illustrating a third example of a construction material arrangement process according to the embodiment.
Fig. 14 is a flowchart illustrating a fourth example of a construction material arrangement process according to the embodiment.
Fig. 15 is a flowchart illustrating a fifth example of a construction material arrangement process according to the embodiment.

### [Description of Embodiments]

Hereinafter, an embodiment of the present invention will be described with reference to the drawings.

### (Outline of system)

First, an outline of a design and construction assistance system according to the present embodiment will be described.

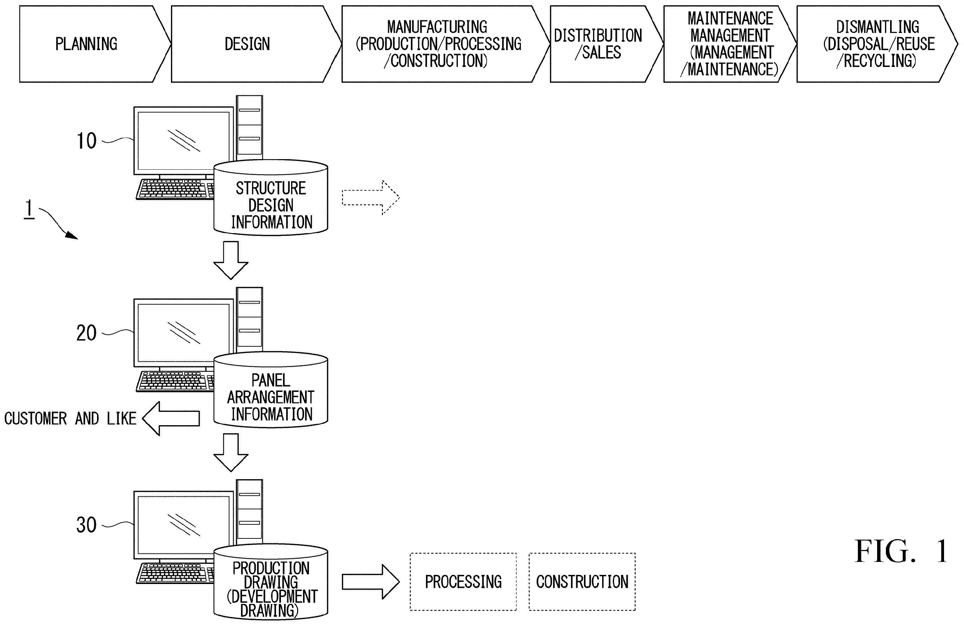

Fig. 1 is a diagram illustrating an outline of a design and construction assistance system according to the present embodiment. An illustrated design and construction assistance system 1 creates, in a construction field, three-dimensional (3D) data regarding the design of a structure such as a building, and also builds an information model (building information modeling: BIM) including attribute information regarding the building such as a name, finishes, specifications and performances of materials or members, and costs in addition to 3D data related to design information. For example, the design and construction assistance system 1 manages, provides, and utilizes information regarding construction materials to be shared by clients, designers, construction material manufacturers, manufacturers (producers/processors/constructors), management companies, and the like on a digital platform that performs a life cycle management sequence from product planning to design, manufacturing (production/processing/ construction), distribution/sales, maintenance management (management/maintenance), and dismantling (disposal/reuse/recycling). This contributes to efficient creation of high-quality buildings.

In the present embodiment, among constituents of the design and construction assistance system 1, constituents related to portions from design to processing of a construction material panel to be attached to an outer wall, an inner wall, a ceiling, a floor, and the like of a building will be described in detail. The design and construction assistance system 1 is configured to include a 3D-computer-aided design (CAD) device 10, a construction material arrangement processing device 20, and a design and construction assistance device 30.

The 3D-CAD device 10 creates 3D data regarding design of a structure such as a planned building, and stores structure design information including the created 3D data in an internal or external storage. The 3D-CAD device 10 outputs the structure design information including the 3D data in response to a request. A designer performs detailed design such as exterior design or interior design on the basis of the structure design information. A manufacturer (producer/processor/constructor) manufactures (produces/processes/constructs) a construction material or the like of each portion forming the structure on the basis of the structure design information (3D data or the like) or detailed design information.

The construction material arrangement processing device 20 extracts a target surface to which a construction material panel is to be attached from the structure design information (3D data or the like) output by the 3D-CAD device 10, and allocates the construction material panel to be arranged on the target surface. The construction material arrangement processing device 20 generates and outputs arrangement information regarding the number, dimensions, and arrangement of construction material panels to be arranged on the target surface. The construction material arrangement processing device 20 may generate an image of a state in which the construction material panels are attached to the target surface on the basis of the generated arrangement information.

The design and construction assistance device 30 generates a production drawing or a construction drawing for processing the construction material panel to be arranged on the target surface. For example, the design and construction assistance device 30 generates and outputs a production drawing for the construction material panel to be arranged on the target surface on the basis of the arrangement information output by the construction material arrangement processing device 20. A processor processes the construction material panel on the basis of the production drawing.

### (Configuration of construction material arrangement processing device 20)

Next, a configuration of the construction material arrangement processing device 20 according to the present embodiment will be described in detail.

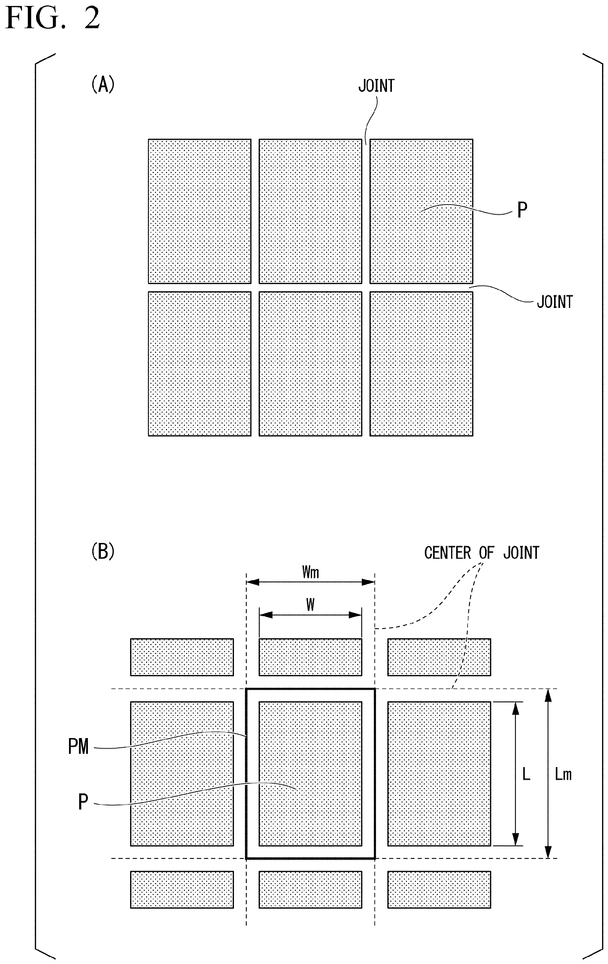

First, definition of terms related to arrangement of construction material panels in the present embodiment will be described. Fig. 2 is a diagram illustrating definitions of terms related to arrangement of construction material panels. As illustrated in Fig. 2(A), a surface of a construction material panel that is seen from in front will be referred to as a face panel P. A gap between two adjacent face panels P will be referred to as a joint. As illustrated in Fig. 2(B), a horizontal dimension (horizontal width) of the face panel P is indicated by W, and a core dimension (horizontal width) from the center of a left joint of the face panel P to the center of a right joint thereof is indicated by Wm. A vertical dimension (vertical width) of the face panel P is indicated by L, and a core dimension (vertical width) from the center of an upper joint of the face panel P to the center of a lower joint thereof is indicated by Lm.

In other words, a region enclosed according to the horizontal dimension W and the vertical dimension L is the face panel P. In contrast, a region enclosed according to the horizontal dimension Wm and the vertical dimension Lm will be referred to as a face panel module PM. For example, allocation of construction material panels when the construction material arrangement processing device 20 arranges the construction material panels may be performed by using the dimensions Wm and Lm of the face panel module PM.

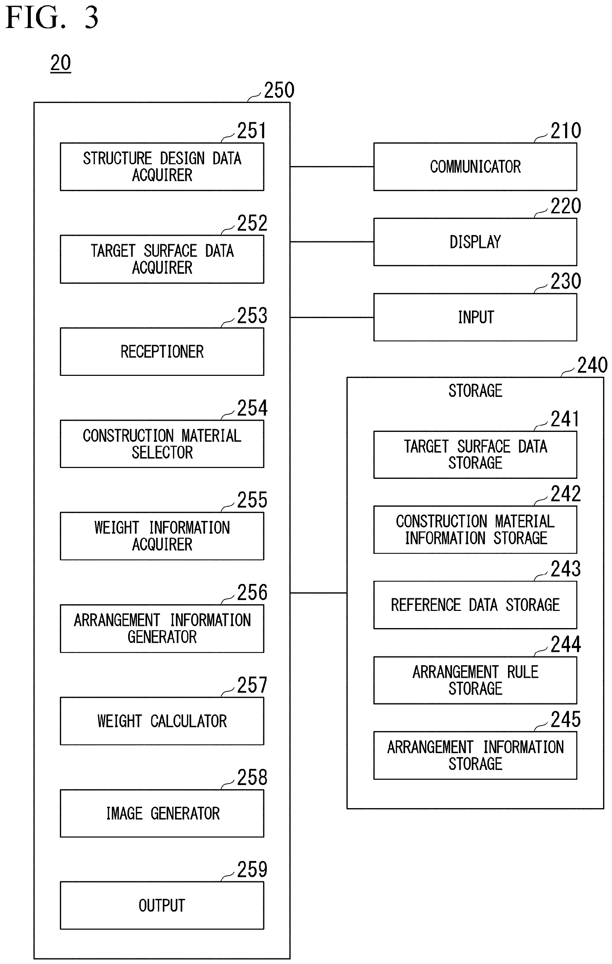

Fig. 3 is a block diagram illustrating an example of a configuration of the construction material arrangement processing device 20 according to the present embodiment. The construction material arrangement processing device 20 is configured to include a communicator 210, a display 220, an input 230, a storage 240, and a controller 250.

The communicator 210 is configured to include, for example, a plurality of Ethernet (registered trademark) ports, a plurality of digital input/output ports such as USBs, or wireless communication ports such as for WIFI (registered trademark) or mobile phone lines, and performs communication with other devices or terminals via a communication network under the control of the controller 250.

The display 220 is a display that displays information such as an image or text, and is configured to include, for example, a liquid crystal display panel or an organic electroluminescence (EL) display panel.

The input 230 receives an operation of a user on a keyboard, a mouse, a touch pad, or the like. The input 230 may be configured as a touch panel integrally with the display 220. The input 230 may receive various instructions using vocal sound that is input to a microphone or the like.

The storage 240 includes, for example, a hard disk drive (HDD), a solid state drive (SSD), an electrically erasable programmable read only memory (EEPROM), a read only memory (ROM), and a random access memory (RAM), and stores various pieces of information, images, programs, and the like. The storage 240 is not limited to being built into the construction material arrangement processing device 20, and may be an external storage device connected thereto via a digital input/output port such as a USB.

For example, the storage 240 is configured to include a target surface data storage 241, a construction material information storage 242, a reference data storage 243, an arrangement rule storage 244, and an arrangement information storage 245.

The target surface data storage 241 stores the structure design information (3D data or the like) acquired from the 3D-CAD device 10, target surface data included in the 3D data, and the like.

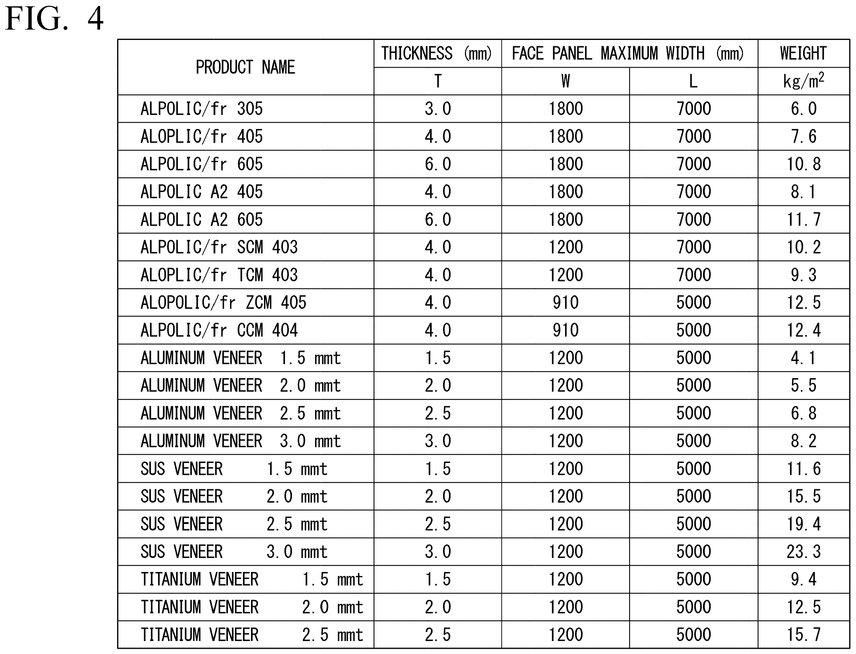

The construction material information storage 242 stores construction material panel information regarding a construction material panel to be attached to a target surface. Fig. 4 is a diagram illustrating an example of the construction material panel information. The illustrated construction material panel information is associated with the product name (commercial product name), the thickness, maximum widths (the maximum dimensions of W and L) of the face panel P, the weight per unit area, the color (color type), the finish (the finish type), cost, and the like. A product (commercial product) registered in the construction material panel information is an option for a construction material panel to be attached to a target surface.

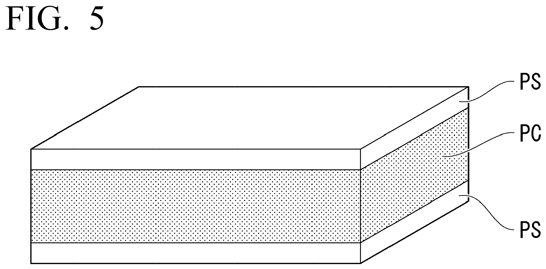

Fig. 5 is a diagram showing an example of a material configuration of a construction material panel. The illustrated construction material panel has a configuration in which surface materials PS are stuck to both sides of a core material PC. As the core material PC, a resin such as polyethylene or foamed polyethylene, a nonflammable material made of a resin containing a filler, or the like is used. As the surface material PS, aluminum, stainless steel, titanium, galvalume steel plate (registered trademark), steel, or the like is used. One or both of surfaces of the surface material PS are subjected to surface treatment. The surface treatment includes polyester resin coating, fluororesin coating, antibacterial/antifungal coating, conductive coating, primer treatment, mirror finishing, and the like.

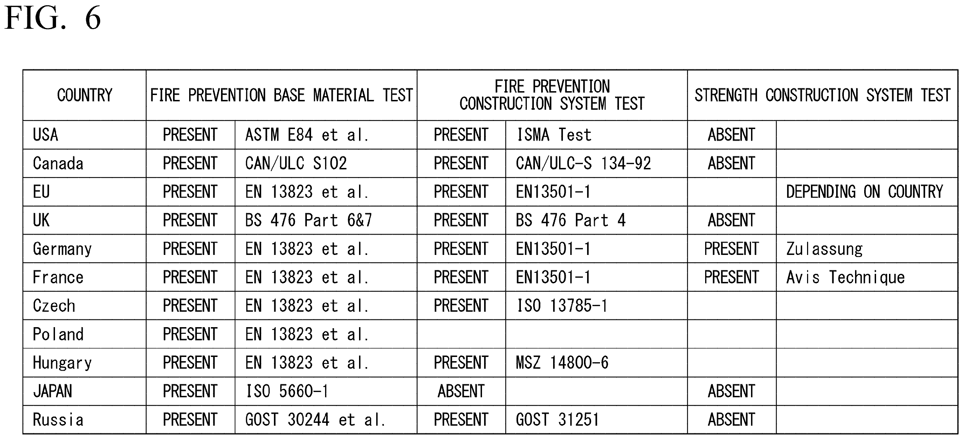

The reference data storage 243 stores reference data for fire prevention performance and strength references stipulated by laws and the like in each country. Fig. 6 is a diagram illustrating an example of the reference data.

The illustrated reference data is associated with references such as a fire prevention base material test, a fire prevention construction system test, a strength construction system test, and the like, which are set for each country. Such a reference is associated with the type of construction material panel conforming to the reference. Consequently, a country in which a building will be constructed is selected, and thus the type of construction material panel conforming to the reference of the country can be selected or set as an option.

In the reference data storage 243, the degree of fire prevention performance is simply associated with the type of construction material panel conforming to the degree of fire prevention performance. For example, in the case of Japan, the degree of fire prevention performance is classified into flame-retardant, quasi-nonflammable, and nonflammable. Flame-retardant, quasi-nonflammable, and nonflammable are set as options, and thus the type of construction material panel conforming to the selected degree of fire prevention performance can be selected or set as an option. The reference data is not limited to reference data of each country, and may be reference data regarding references prescribed in prefectures, states, municipalities, specific areas, and the like.

The arrangement rule storage 244 stores arrangement rule information for arranging construction material panels to be attached to a target surface. When the construction material arrangement processing device 20 automatically arranges construction material panels, the face panel module PM obtained by adding dimensions of a joint to dimensions of the face panel P is arranged. Hereinafter, an example of an arrangement rule for a construction material panel will be described.

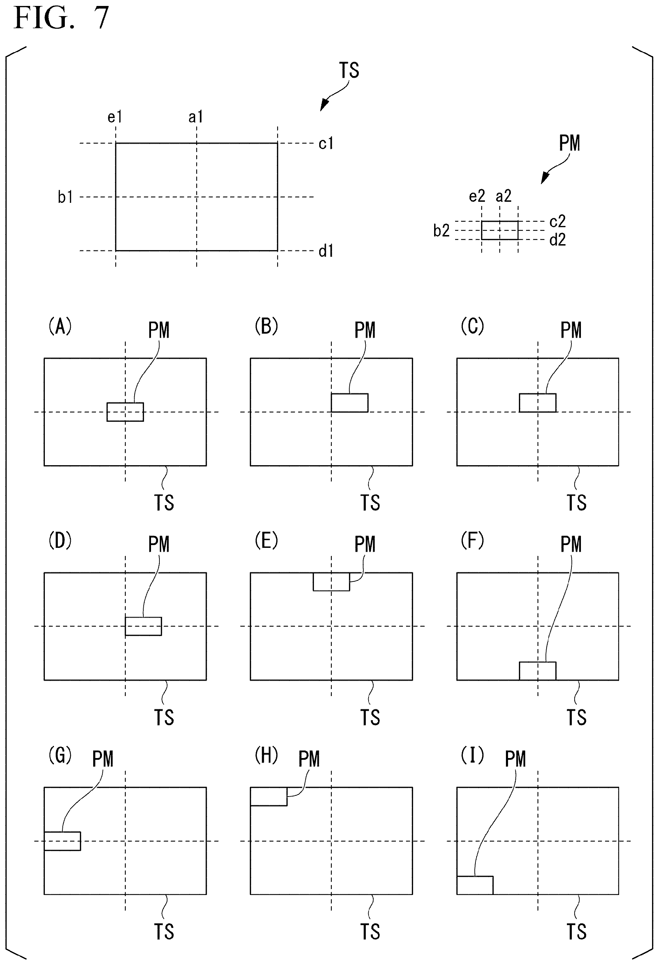

Fig. 7 is a diagram illustrating an example of a method of arranging the face panel module PM on a target surface. An illustrated target surface TS indicates a target surface to which a construction material panel is attached. Here, a line that vertically passes through the horizontal center of the target surface TS will be referred to as a target surface reference vertical center line a1. A line that horizontally passes through the vertical center of the target surface TS will be referred to as a target surface reference horizontal center line b1. An uppermost horizontal line of the target surface TS will be referred to as a target surface reference uppermost line c1. A lowermost horizontal line of the target surface TS will be referred to as a target surface reference lowermost line d1. A line that vertically passes through a left end of the target surface TS will be referred to as a target surface reference left end line e1. The illustrated face panel module PM indicates a reference position of a face panel module that is initially arranged when arrangement of the face panel module PM on the target surface TS is determined. Here, a line that vertically passes through the horizontal center of the face panel module PM will be referred to as a face panel module reference vertical center line a2. A line that horizontally passes through the vertical center of the face panel module PM will be referred to as a face panel module reference horizontal center line b2. An uppermost horizontal line of the face panel module PM will be referred to as a face panel module reference uppermost line c2. A lowermost horizontal line of the face panel module PM will be referred to as a face panel module reference lowermost line d2. A line that vertically passes through a left end of the face panel module PM will be referred to as a face panel module reference left end line e2.

For example, as an arrangement method of arranging the face panel module PM at a reference position of the target surface TS, nine types of arrangement rules illustrated in Figs. 7(A) to 7(I) are defined.
(A) The face panel module PM is arranged at the reference position such that the target surface reference vertical center line a1 overlaps the face panel module reference vertical center line a2, and the target surface reference horizontal center line b1 overlaps the face panel module reference horizontal center line b2, and then the face panel modules PM are consecutively arranged in the upward-downward direction and leftward-rightward direction.
(B) The face panel module PM is arranged at the reference position such that the target surface reference vertical center line a1 overlaps the face panel module reference left end line e2, and the target surface reference horizontal center line b1 overlaps the face panel module reference horizontal center line b2, and then the face panel modules PM are consecutively arranged in the upward-downward direction and leftward-rightward direction.
(C) The face panel module PM is arranged at the reference position such that the target surface reference vertical center line a1 overlaps the face panel module reference vertical center line a2, and the target surface reference horizontal center line b1 overlaps the face panel module reference lowermost line d2, and then the face panel modules PM are consecutively arranged in the upward-downward direction and leftward-rightward direction.
(D) The face panel module PM is arranged at the reference position such that the target surface reference vertical center line a1 overlaps the face panel module reference left end line e2, and the target surface reference horizontal center line b1 overlaps the face panel module reference horizontal center line b2, and then the face panel modules PM are consecutively arranged in the upward-downward direction and leftward-rightward direction.
(E) The face panel module PM is arranged at the reference position such that the target surface reference vertical center line a1 overlaps the face panel module reference vertical center line a2, and the target surface reference uppermost line c1 overlaps the face panel module reference uppermost line c2, and then the face panel modules PM are consecutively arranged in the downward direction and leftward-rightward direction.
(F) The face panel module PM is arranged at the reference position such that the target surface reference vertical center line a1 overlaps the face panel module reference vertical center line a2, and the target surface reference lowermost line d1 overlaps the face panel module reference lowermost line d2, and then the face panel modules PM are consecutively arranged in the upward direction and the leftward-rightward direction.
(G) The face panel module PM is arranged at the reference position such that the target surface reference left end line e1 overlaps the face panel module reference left end line e2, and the target surface reference horizontal center line b1 overlaps the face panel module reference horizontal center line b2, and then the face panel modules PM are consecutively arranged in the upward-downward direction and the rightward direction.
(H) The face panel module PM is arranged at the reference position such that the target surface reference uppermost line c1 overlaps the face panel module reference uppermost line c2, and the target surface reference left end line e1 overlaps the face panel module reference left end line e2, and then the face panel modules PM are consecutively arranged in the downward direction and the rightward direction.
(I) The face panel module PM is arranged at the reference position such that the target surface reference lowermost line d1 overlaps the face panel module reference lowermost line d2, and the target surface reference left end line e1 overlaps the face panel module reference left end line e2, and then the face panel modules PM are consecutively arranged in the upward direction and the rightward direction.

As an arrangement rule in a case where the construction material arrangement processing device 20 automatically sequentially generates construction material panel arrangement information with respect to a plurality of target surfaces, a target surface on which the face panel module PM is initially arranged may be set to, for example, a surface having a main entrance of a building, a largest target surface, or a target surface designated by a customer, and then the face panel module PM may be similarly arranged on a plurality of remaining target surfaces in the same arrangement rule. An arrangement rule may be employed in which the face panel module PM is consecutively arranged on a plurality of target surfaces in a clockwise or counterclockwise direction starting from a target surface on which the face panel module PM is initially arranged.

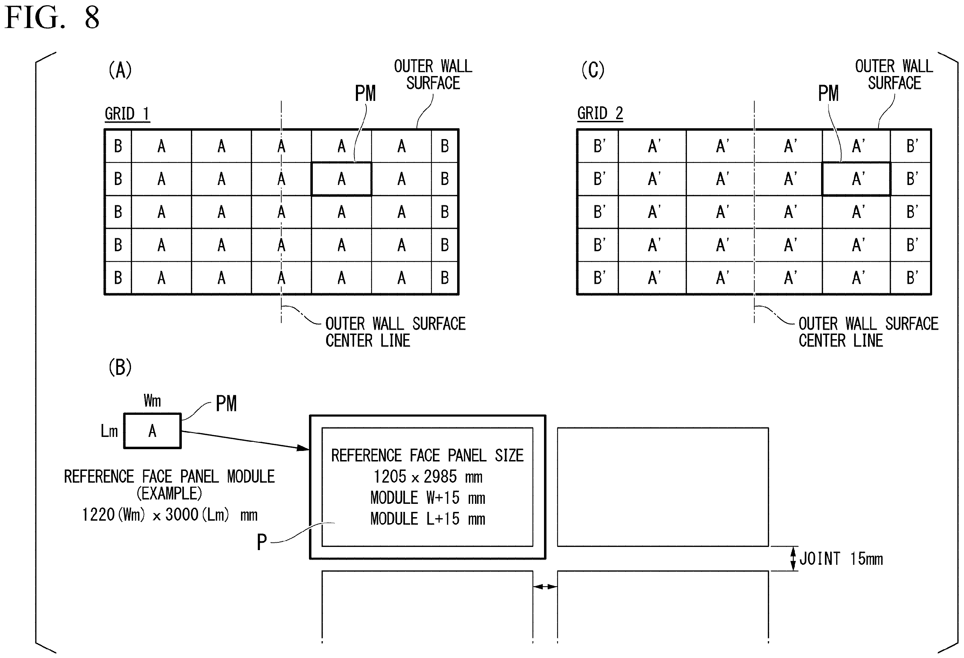

Fig. 8 is a diagram illustrating an example in which construction material panels are arranged on a 2D target surface. Fig. 8 illustrates an example in which a target surface is an outer wall surface. An outer wall surface center line corresponds to the target surface reference vertical center line a1 in Fig. 7. Fig. 8(A) illustrates an arrangement example in which the face panel modules PM are arranged in a grid shape in the arrangement rule defined in Fig. 7(A). Fig. 8(B) illustrates details of the arrangement example in Fig. 8(A). Herein, an example is illustrated in which dimensions of the face panel module PM used as a reference (reference face panel module) are Wm = 1220 mm and Lm = 3000 mm. In this case, the dimensions of the face panel module PM are dimensions obtained by adding dimensions (W = 1205 mm and L = 2985 mm) of the face panel P (reference face panel) used as a reference to a joint width (15 mm). Fig. 8(C) illustrates an arrangement example in a case where the face panel modules PM are arranged in a grid shape in the arrangement rule defined in Fig. 7(D).

As shown in the arrangement examples in Figs. 8(A) and 8(C), some or all of the face panel modules PM arranged at the upper, lower, left, and right ends of each target surface (outer wall surface) may be accessories (that is, dimensions thereof different from those of the reference face panel module). In the illustrated example, the face panel modules PM (the face panel modules indicated by "B" or "B"') arranged at the left and right ends have dimensions smaller than those of the reference face panel modules PM (the face panel modules indicated by "A" or "A"') arranged at the center. This occurs in a case where a dimension of a target surface is not an integer multiple of a dimension of the reference face panel module PM. A dimension corresponding a fraction at the integer multiple is a dimension of the face panel module PM arranged at the end. In a case where a fraction at the integer multiple is a dimension smaller than a predetermined length (for example, in a case where a single component is too short), it may be handled that the adjacent face panel module PM has an extended dimension corresponding to the fraction. In other words, the face panel module PM arranged at each of the upper, lower, left, and right ends may have dimensions smaller or larger than those of the reference face panel module PM arranged at the center.

As described above, in a case of a building, ceiling heights of the bottom (first floor) and the top (top floor) may differ from those of middle floors, and a size of a target surface may differ depending on the floors. Thus, for example, even if the dimensions are such that no accessory is generated on the target surface of the middle floor, accessories may be required at the bottom (first floor) and the top (top floor). In a case where a target surface of the bottom (first floor) is set to have dimensions such that an accessory is not generated, an accessory may be necessary in the middle floors and the top (top floor). Similarly, in a case where a target surface of the top (top floor) is set to have dimensions such that an accessory is not generated, an accessory may be necessary in the middle floors and the bottom (bottom floor).

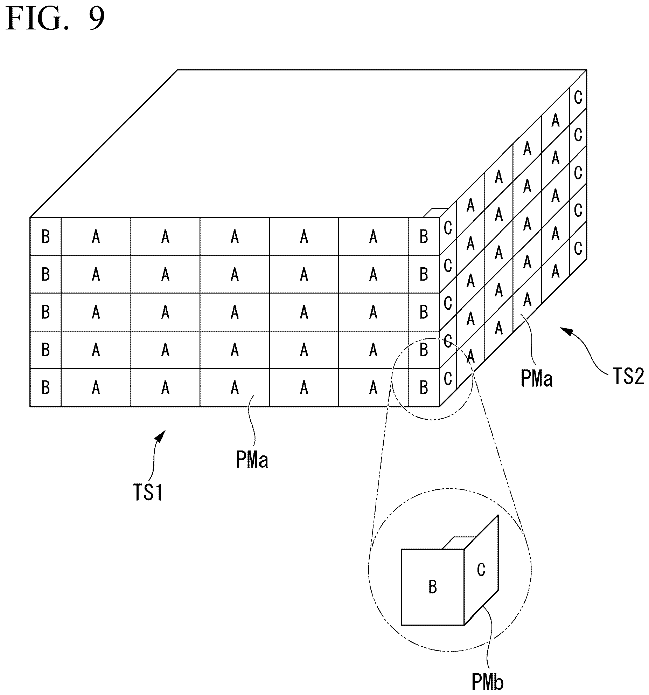

Fig. 9 is a diagram illustrating an example in which construction material panels are arranged on a 3D target surface. The construction material arrangement processing device 20 may allocate construction material panels to portions over a plurality of target surfaces. The illustrated example is an arrangement example in a case where the face panel modules PM are arranged on a target surface TS1 and a target surface TS2 adjacent to each other. In the illustrated example, the face panel module PM in an "A" portion used as a reference is indicated by the reference sign PMa. Here, each of dimensions (area) of a "B" portion at the right end of the target surface TS1 and dimensions (area) of a "C" portion at the left end of the target surface TS2 is different from dimensions (area) of the "A" portion used as a reference. For example, each of a width dimension of the "B" portion and a width dimension of the "C" portion is smaller than a width dimension of the "A" portion. The dimensions of the "B" portion and the dimensions of the "C" portion may be the same as or different from each other. Fig. 9 illustrates the example in which the dimensions of the reference face panel module PMa of the target surface TS1 and the dimensions of the reference face panel module PMa of the target surface TS2 are the same as each other, but the dimensions thereof may be different from each other.

For example, an arrangement rule is defined such that, at a protruding corner where the right end of the target surface TS1 and the left end of the target surface TS2 meet at a right angle, the face panel module PMb as a single component into which the "B" portion at the right end of the target surface TS1 and the "C" portion at the left end of the target surface TS2 are integrated is arranged instead of respectively arranging the face panel modules (two face panel modules) on the "B" portion at the right end of the target surface TS1 and the "C" portion at the left end of the target surface TS2. In other words, it is defined as the arrangement rule to paste a single construction material panel (single component) over two target surfaces. An angle of the protruding corner is not limited to a right angle, and may be any angle. In other words, a construction material panel subjected to folding processing according to an angle of the protruding corner may be attached to the protruding corner.

The example illustrated in Fig. 9 is an example in which construction material panels are arranged on two surfaces such as the target surface TS1 and the target surface TS2 on the right side of the target surface TS1, but there is no limitation to two surfaces, and construction material panels may be similarly arranged on other surfaces. For example, construction material panels may be arranged on two surfaces such as the target surface TS1 and a surface on the upper side of the target surface TS1, two surfaces such as the target surface TS1 and a surface on the lower side of the target surface TS1, and two surfaces such as the target surface TS1 and a surface on the left side of the target surface TS1 along with protruding corners thereof. Construction material panels may be arranged on three or more surfaces including other surfaces in addition to two surfaces such as the target surface TS1 and the target surface TS2. Construction material panels may be arranged on two surfaces other than the two surfaces such as the target surface TS1 and the target surface TS2 or three or more surfaces along with a protruding corner and/or a recessed corner thereof. In this case, a construction material panel as an integrated single component may be allocated to a portion (a protruding corner and/or a recessed corner) over two surfaces among three or more target surfaces, and a construction material panel as an integrated single component may be allocated to a portion (a protruding corner and/or a recessed corner) over three or more target surfaces. The example illustrated in Fig. 9 is an example in which the face panel module PMb integrated over a plurality of target surfaces is arranged at the protruding corner, but a face panel module integrated over a plurality of target surfaces may be arranged at a recessed corner (for example, in a case where the illustrated protruding corner corresponds to an outer wall surface, the recessed corner corresponds to an inner wall surface inside the outer wall surface). Face panel modules integrated over a plurality of target surfaces do not need to be arranged on some or all protruding corners or recessed corners, and a face panel module may be arranged on each target surface. As an arrangement rule, the shape of a structure such as a building may be captured in 3D, and may thus be optimized to minimize the number of face panel modules serving as accessories.

The arrangement information storage 245 stores the arrangement information, generated by the construction material arrangement processing device 20, in which construction material panels are arranged on a target surface. For example, the arrangement information stores information specifying a structure, information specifying a target surface, and information regarding arrangement such as an arrangement pattern, an arrangement orientation, dimensions of the face panel module PM, and dimensions of a joint in association with attribute information.

The attribute information includes, for example, the type (the product name or the like), the color, the finish, and the weight of construction material.

Referring to Fig. 3 again, the controller 250 is configured to include a central processing unit (CPU) and the like, and realizes various functions by executing the programs stored in the storage 240. For example, the controller 250 is configured to include, as realized functional configurations, a structure design data acquirer 251, a target surface data acquirer 252, a receptioner 253, a construction material selector 254, a weight information acquirer 255, an arrangement information generator 256, a weight calculator 257, an image generator 258, and an output 259.

The structure design data acquirer 251 acquires design information of a structure such as a building, designed by the 3D-CAD device 10, from the 3D-CAD device 10 via the communicator 210. The design information including 3D data regarding design of a structure including a plurality of target surfaces that are targets to which construction material panels are attached is stored in an internal or external storage of the 3D-CAD device 10. For example, the structure design data acquirer 251 acquires the design information including at least data regarding a target surface that is a target to which construction material panels are attached from the 3D-CAD device 10. The structure design data acquirer 251 stores the acquired structure design information into the target surface data storage 241.

The target surface data acquirer 252 acquires data (2D data or 3D data) regarding a target surface that is a target to which a construction material panel is attached from the target surface data storage 241.

The receptioner 253 receives various pieces of input information that are input from a user via the input 230. For example, the receptioner 253 receives information specifying a target surface that is a target to which a construction material panel is attached on the basis of the user's operation on the input 230. The receptioner 253 receives information regarding dimensions designated as reference dimensions of a construction material panel to be attached to a target surface on the basis of the user's operation on the input 230. The reference dimensions are dimensions of the face panel module PM used as a reference (reference face panel module) described with reference to Fig. 8. In addition to the reference dimensions of the construction material panel attached to the target surface, the receptioner 253 may further receive information regarding the color and the finish of the construction material panel, or the orientation or the arrangement pattern in which the construction material panel is attached to the target surface on the basis of the user's operation on the input 230.

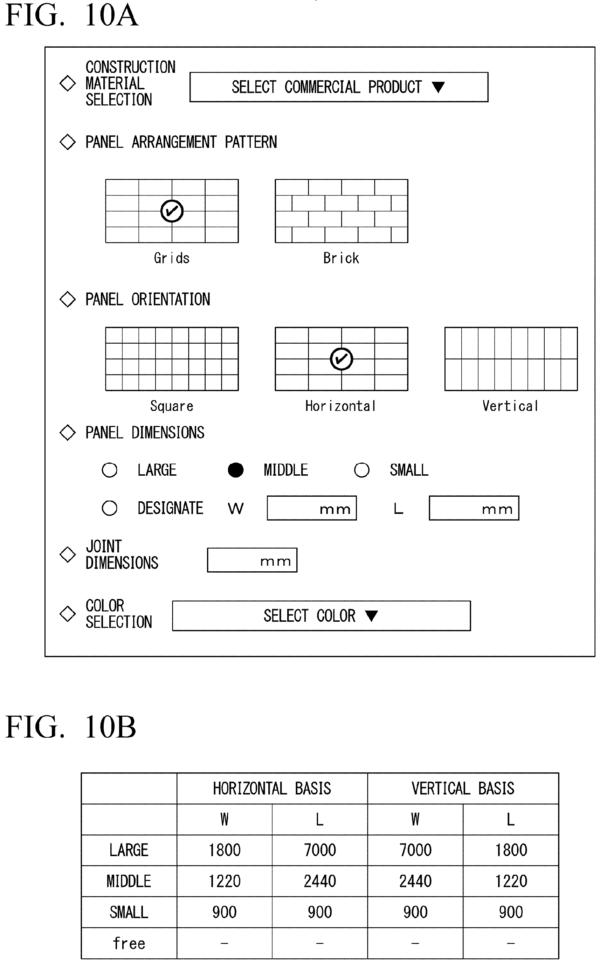

Fig. 10A is a diagram illustrating an example of an operation screen for the receptioner 253 receiving input information from the user. Fig. 10A illustrates an example of the operation screen for allowing the user to input a condition when a construction material panel is arranged on a target surface.

An item "construction material selection" is a selection item for selecting the type of construction material panel, and, for example, the product name (commercial product name) of the construction material panel information stored in the construction material information storage 242 illustrated in Fig. 4 is displayed as an option.

An item "panel arrangement pattern" is a selection item for selecting the type of arrangement when construction material panels are arranged, and is selectable from, for example, grid-like arrangement (Grids) and block-like (staggered) arrangement (Brick).

An item "panel orientation" is a selection item for selecting an orientation in which construction material panels are arranged, and is selectable from, for example, horizontal basis arrangement (Horizontal) in which a construction material panel is long in a transverse direction (horizontal direction), vertical basis arrangement (Vertical) in which a construction material panel is long in a longitudinal direction (vertical direction), and arrangement (Square) in which a square construction material panel having no distinction between a transverse direction and a longitudinal direction is arranged.

An item "panel dimensions" is a selection item for selecting dimensions of the face panel module PM used as a reference (reference face panel module), and is selectable from, large, middle, small, and designate. Fig. 10B is a diagram illustrating examples of dimensions of a construction material panel (face panel module PM). As illustrated in Fig. 10B, large, middle, and small are preset dimensions. In a case of designate, the user may enter any dimensions, but the maximum dimensions or the minimum dimensions may be set in advance.

An item "joint dimensions" is an item for designating dimensions of a joint between two adjacent face panels P, and, for example, the user may enter any dimensions. The joint dimensions may be selectable from a plurality of dimensions set in advance.

An item "color selection" is a selection item for selecting the color of a construction material panel, and colors that are selectable in the type of construction material panel selected in the item "construction material selection" are displayed as options.

At least one of the items "construction material selection", "panel arrangement pattern", "panel orientation", "panel dimensions", "joint dimensions", and "color selection" illustrated in Fig. 10 may be selectable by the user, and items other than the selectable items may be set in advance. For example, at least the item "panel dimensions" may be selectable by the user, and the other items may be set in advance. Items other than the above-described items may be selectable.

The construction material selector 254 selects the type of construction material panel to be attached to a target surface. For example, the construction material selector 254 selects the type of construction material panel selected on the basis of the user's operation (for example, the type of construction material panel selected in the item "construction material selection" illustrated in Fig. 10) as the type of construction material panel to be attached to a target surface. The construction material selector 254 may present a construction material panel based on a reference defined in each country among a plurality of types of construction material panels, to the user as an option. The reference defined in each country is a reference for fire prevention performance or a strength defined in each country (refer to the reference data illustrated in Fig. 6). For example, the construction material selector 254 may display an option for a construction material panel based on a reference defined in each country among a plurality of types of construction material panels as the option in the item "construction material selection" illustrated in Fig. 10. The construction material selector 254 may select the type of construction material panel conforming to a reference defined in a country selected by the user among a plurality of types of construction material panels.

The weight information acquirer 255 acquires weight information regarding the weight per unit area of a construction material panel by referring to the construction material panel information stored in the construction material information storage 242. The weight of the construction material panel differs depending on fire prevention performance, a strength, or the like.

The weight calculator 257 calculates the weight of the construction material panel in a case where the construction material panel selected by the construction material selector 254 is to be attached to a target surface on the basis of the arrangement information generated by the arrangement information generator 256 and the weight information acquired by the weight information acquirer 255. For example, the weight calculator 257 calculates the weight of each construction material panel to be attached to a target surface or the total weight of each target surface. Since there is a case where construction material panels are attached to a plurality of 3D target surfaces, the weight calculator 257 may calculate the total weight of construction material panels to be attached over a plurality of target surfaces. The weight calculator 257 may calculate the total weight of construction material panels to be attached to all target surfaces of a building.

The arrangement information generator 256 generates arrangement information regarding the number, dimensions, and arrangement of construction materials to be arranged on a target surface according to predetermined arrangement rules on the basis of data (2D data or 3D data) regarding the target surface acquired from the structure design information (3D data or the like) and information regarding the construction materials to be attached to the target surface. For example, the arrangement information generator 256 generates the arrangement information according to predetermined arrangement rules with the type of construction material panel selected by the construction material selector 254 as a construction material panel to be arranged on a target surface. The predetermined arrangement rule is an arrangement rule stored in the arrangement rule storage 244, and indicates at least one rule in a case where there are a plurality of rules. For example, the predetermined arrangement rule is selected from among the arrangement rules described with reference to Figs. 7(A) to 7(I), Fig. 8, and Fig. 9. The arrangement information generator 256 generates arrangement information regarding the number, dimensions, and arrangement of construction material panels to be arranged on a target surface according to predetermined arrangement rules (for example, an arrangement rule selected by the user) on the basis of at least designated dimensions of a construction material panel (dimensions of the face panel module PM used as a reference (reference face panel module)). This is not applied to a case where panel arrangement is determined in advance by a designer.

The arrangement information generator 256 may generate arrangement information in which a specific construction material (a construction material panel serving as an accessory) having specific shape and dimensions attached over a first target surface and a second target surface is arranged at a protruding corner and/or a recessed corner of the first target surface (for example, the target surface TS1 in Fig. 9) and the second target surface (for example, the target surface TS2 in Fig. 9) among a plurality of target surfaces is arranged. For example, when the arrangement rule described with reference to Fig. 9 is selected as the predetermined arrangement rule in this case, in a case where it is assumed that a face panel module ("B" portion) having a width dimensions shorter than that of a face panel module ("A" portion) used as a reference, arranged at the center of the first target surface is arranged at the end of the first target surface, and a face panel module ("C" portion) having a width dimensions shorter than that of a face panel module ("A" portion) used as a reference, arranged at the center of the second target surface adjacent to the first target surface is arranged at the end of the second target surface, a face panel module as a single component subjected to folding processing is arranged on a portion occupied by the two face panel modules (the "B" portion and the "C" portion) arranged on a portion where the first target surface and the second target surface intersect each other. For example, the arrangement information generator 256 determines dimensions of the specific construction material on the basis of dimensions of the face panel module PM used as a reference (reference face panel module), dimensions of the first target surface, and dimensions of the second target surface received by the receptioner 253, and also determines the shape of the specific construction material on the basis of an angle of the protruding corner and/or the recessed corner of the first target surface and the second target surface. The first target surface may be the target surface on which the face panel module PM is initially arranged, the surface having a main entrance of a building, the largest target surface, or the target surface designated by a customer described above.

The arrangement information generator 256 may generate arrangement information regarding the number, dimensions, and arrangement of construction material panels to be arranged on a target surface on the basis of the color, the finish, or the orientation of the construction material panel to be attached to the target surface or the arrangement pattern in addition to at least designated dimensions of a construction material panel (the face panel module PM used as a reference (dimensions of the reference face panel module)).

The arrangement information generator 256 stores the generated arrangement information into the arrangement information storage 245. In this case, the arrangement information generator 256 may also store attribute information in association with the arrangement information. The attribute information is, for example, information regarding the weight calculated by the weight calculator 257, and information regarding the color, the finish, or the cost of the construction material panel to be attached to the target surface.

The image generator 258 generates an image of a state in which the construction material panel is attached to the target surface on the basis of the arrangement information generated by the arrangement information generator 256. For example, the image generator 258 displays an image diagram or an image picture of a state in which the construction material panel is actually attached to the target surface on the basis of the arrangement information generated by the arrangement information generator 256 on the display 220. The image diagram or the image picture includes a diagram or a picture that visualizes a scene of a structure (a building or the like) in a state in which the construction material panel is actually attached to the target surface. The color or the finish of the construction material panel may also reproduce the selected color or finish.

The output 259 outputs the arrangement information generated by the arrangement information generator 256. As an output method, the arrangement information may be displayed on the display 220, may be stored in a file to be preserved in an HDD, and may be transmitted via the communicator 210. The output 259 may output the arrangement information generated by the arrangement information generator 256 in association with attribute information including at least information regarding the weight calculated by the weight calculator 257. The attribute information may include, for example, the type (the product name or the commercial product name) of construction material panel to be attached to the target surface, and information regarding the color, the finish, or cost of the construction material panel. The attribute information may include information regarding a place where a building is to be constructed, such as a location condition, a client, or a designer. The attribute information may include data regarding the target surface to which the construction material panel is to be attached, 3D data of a structure having the target surface, identification information for specifying each piece of data, or the like. The output 259 may output the image generated by the image generator 258 in association with the arrangement information.

### (Operation in construction material arrangement process)

Next, an operation in a construction material arrangement process of the construction material arrangement processing device 20 generating construction material panel arrangement information with respect to a target surface will be described.

### (First example of construction material arrangement process)

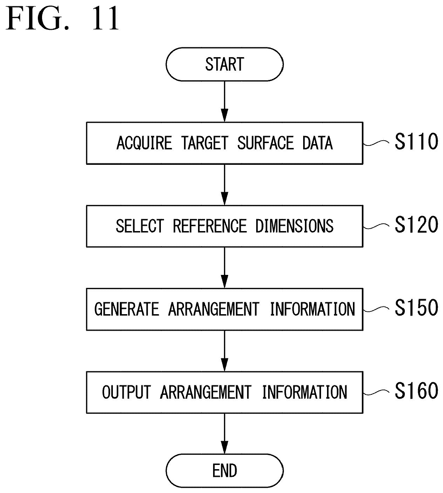

Fig. 11 is a flowchart illustrating a first example of the construction material arrangement process according to the present embodiment. The example of the construction material arrangement process illustrated in Fig. 11 is an example in which arrangement information is generated by selecting dimensions of a construction material panel (dimensions of the face panel module PM (reference face panel module)) to be arranged on a 2D target surface.

(Step S110) The target surface data acquirer 252 acquires 2D data regarding a target surface that is a target to which a construction material panel is to be attached from the target surface data storage 241. The flow proceeds to a process in step S120.

(Step S120) The receptioner 253 receives selected reference dimensions of the construction material panel on the basis of a user's operation on the input 230. The reference dimensions are, for example, dimensions of the face panel module PM used as a reference (reference face panel module) described with reference to Fig. 8. The user may select the dimensions from among dimension options set in advance, and may designate any dimensions. The flow proceeds to a process in step S150.

(Step S150) The arrangement information generator 256 generates arrangement information regarding the number, dimensions, and arrangement of construction materials to be arranged on a target surface according to an arrangement rule on the basis of the 2D data regarding the target surface and the reference dimensions (for example, dimensions selected in the item "panel selection" illustrated in Fig. 10) selected by the user (refer to Figs. 7 and 8). The flow proceeds to a process in step S160.

(Step S160) The output 259 outputs the arrangement information generated by the arrangement information generator 256.

In a case where construction material panel arrangement information with respect to a plurality of target surfaces is generated, the processes in steps S110, S120, S150, and S160 are repeatedly performed for each target surface. The process in step S160 may be performed for each target surface, and may be performed as a process of outputting arrangement information with respect to all target surfaces after the processes in steps S110, S120, and S150 are performed for all target surfaces.

### (Second example of construction material arrangement process)

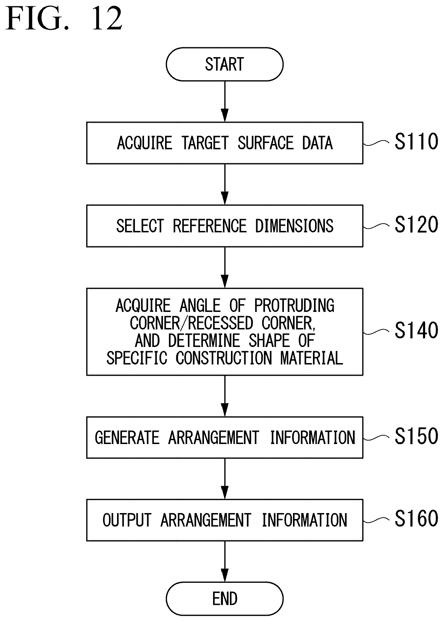

Fig. 12 is a flowchart illustrating a second example of the construction material arrangement process according to the present embodiment. The example of the construction material arrangement process illustrated in Fig. 12 is an example in which arrangement information is generated by selecting dimensions of a construction material panel (dimensions of the face panel module PM (reference face panel module)) to be arranged on a 3D target surface.

(Step S110) The target surface data acquirer 252 acquires 3D data regarding a target surface that is a target to which a construction material panel is to be attached from the target surface data storage 241. The flow proceeds to a process in step S120.

(Step S120) The receptioner 253 receives selected reference dimensions of the construction material panel on the basis of a user's operation on the input 230. The reference dimensions are, for example, dimensions of the face panel module PM used as a reference (reference face panel module) described with reference to Fig. 8. The user may select the dimensions from among dimension options set in advance, and may designate any dimensions. The flow proceeds to a process in step S140.

(Step S140) The arrangement information generator 256 acquires an angle of a protruding corner and/or a recessed corner, and determines the shape of a specific construction material (accessory) (a folding angle of an accessory or the like). The flow proceeds to a process in step S150.

(Step S150) The arrangement information generator 256 generates arrangement information regarding the number, dimensions, and arrangement of construction materials to be arranged on the target surface according to an arrangement rule on the basis of the 3D data regarding the target surface, the reference dimensions (for example, dimensions selected in the item "panel selection" illustrated in Fig. 10) selected by the user, and the angle of the protruding corner/recessed corner (refer to Figs. 7 and 9). The flow proceeds to a process in step S160.

(Step S160) The output 259 outputs the arrangement information generated by the arrangement information generator 256.

### (Third example of construction material arrangement process)

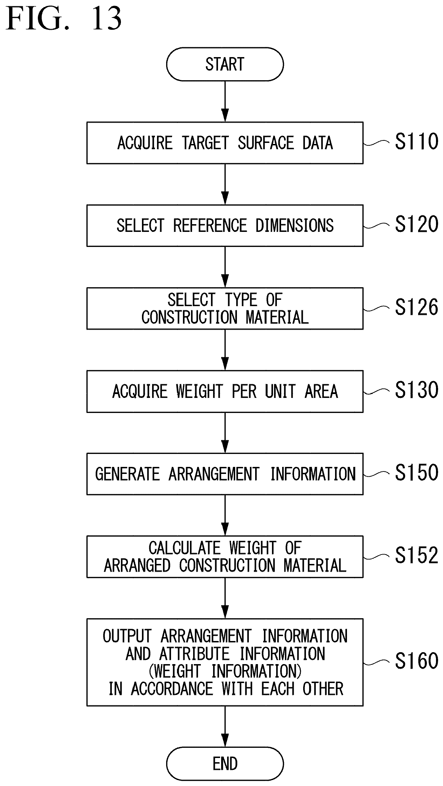

Fig. 13 is a flowchart illustrating a third example of the construction material arrangement process according to the present embodiment. The example of the construction material arrangement process illustrated in Fig. 13 is an example in which arrangement information is generated by selecting the type and dimensions of a construction material panel (dimensions of the face panel module PM (reference face panel module)) to be arranged on a 2D target surface, and weight information of the construction material panel to be arranged is added as attribute information.

(Step S110) The target surface data acquirer 252 acquires 2D data regarding a target surface that is a target to which a construction material panel is to be attached from the target surface data storage 241. The flow proceeds to a process in step S120.

(Step S120) The receptioner 253 receives the selected type and reference dimensions of the construction material panel on the basis of a user's operation on the input 230. The reference dimensions are, for example, dimensions of the face panel module PM used as a reference (reference face panel module) described with reference to Fig. 8. The user may select the dimensions from among dimension options set in advance, and may designate any dimensions. The flow proceeds to a process in step S126.

(Step S126) The construction material selector 254 selects the type of the construction material panel (for example, the type of construction material panel selected in the item "construction material selection" illustrated in Fig. 10) selected on the basis of the user's operation as the type of construction material panel to be attached to the target surface. The flow proceeds to a process in step S130.

(Step S130) The weight information acquirer 255 acquires weight information regarding the weight per unit area of the construction material panel selected by the construction material selector 254 by referring to the construction material panel information stored in the construction material information storage 242. The flow proceeds to a process in step S150.

(Step S150) The arrangement information generator 256 generates arrangement information regarding the number, dimensions, and arrangement of construction materials to be arranged on the target surface according to an arrangement rule on the basis of the 2D data regarding the target surface and the reference dimensions selected by the user (refer to Figs. 7 and 8). The flow proceeds to a process in step S152.

(Step S152) The weight calculator 257 calculates the weight of the construction material panel in a case where the construction material panel selected by the construction material selector 254 is to be attached to the target surface on the basis of the arrangement information generated by the arrangement information generator 256 and the weight information acquired by the weight information acquirer 255. The flow proceeds to a process in step S160.

(Step S160) The output 259 outputs the arrangement information generated by the arrangement information generator 256 in association with attribute information including the weight information calculated by the weight calculator 257.

The example of the construction material arrangement process illustrated in Fig. 13 is an example in which a construction material panel is arranged on a 2D target surface, but may also be applied to a case where a construction material panel is arranged on a 3D target surface. For example, in the construction material arrangement process illustrated in Fig. 13, 3D data regarding a target surface may be acquired in the process in step S110, an angle of a protruding corner and/or a recessed corner may be acquired by adding the process in step S140 in Fig. 12, and arrangement information regarding the number, dimensions, and arrangement of construction materials to be arranged on the target surface may be generated according to an arrangement rule on the basis of the 3D data regarding the target surface and the reference dimensions selected by the user in the process in step S150.

### (Fourth example of construction material arrangement process)

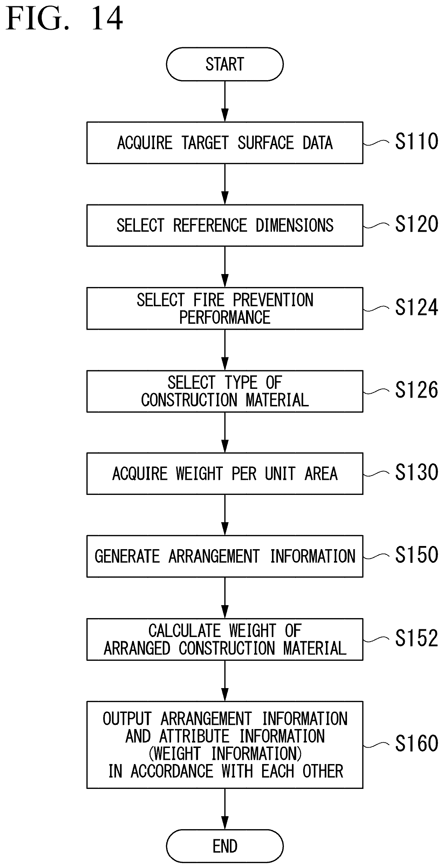

Fig. 14 is a flowchart illustrating a fourth example of the construction material arrangement process according to the present embodiment. The example of the construction material arrangement process illustrated in Fig. 14 is an example in which arrangement information is generated by selecting dimensions of a construction material panel (dimensions of the face panel module PM (reference face panel module)) to be arranged on a 2D target surface and fire prevention performance, and weight information of the construction material panel to be arranged is added as attribute information.

(Step S110) The target surface data acquirer 252 acquires 2D data regarding a target surface that is a target to which a construction material panel is to be attached from the target surface data storage 241. The flow proceeds to a process in step S120.

(Step S120) The receptioner 253 receives the selected type and reference dimensions of the construction material panel on the basis of a user's operation on the input 230. The reference dimensions are, for example, dimensions of the face panel module PM used as a reference (reference face panel module) described with reference to Fig. 8. The user may select the dimensions from among dimension options set in advance, and may designate any dimensions. The flow proceeds to a process in step S124.

(Step S124) The receptioner 253 receives selection for fire prevention performance (flame-retardant, quasi-nonflammable, nonflammable, or the like) of a building having the target surface on the basis of the user's operation on the input 230. The flow proceeds to a process in step S126.

(Step S126) The construction material selector 254 selects the type of construction material panel conforming to the fire prevention performance selected on the basis of the user's operation. Alternatively, the construction material selector 254 may narrow down options for the type of construction material panel conforming to the fire prevention performance selected on the basis of the user's operation and select the type of construction material panel selected by the user from among the options. The flow proceeds to a process in step S130.

(Step S130) The weight information acquirer 255 acquires weight information regarding the weight per unit area of the construction material panel selected by the construction material selector 254 by referring to the construction material panel information stored in the construction material information storage 242. The flow proceeds to a process in step S150.

(Step S150) The arrangement information generator 256 generates arrangement information regarding the number, dimensions, and arrangement of construction materials to be arranged on the target surface according to an arrangement rule on the basis of the 2D data regarding the target surface and the reference dimensions selected by the user (refer to Figs. 7 and 8). The flow proceeds to a process in step S152.

(Step S152) The weight calculator 257 calculates the weight of the construction material panel in a case where the construction material panel selected by the construction material selector 254 is to be attached to the target surface on the basis of the arrangement information generated by the arrangement information generator 256 and the weight information acquired by the weight information acquirer 255. The flow proceeds to a process in step S160.

(Step S160) The output 259 outputs the arrangement information generated by the arrangement information generator 256 in association with attribute information including the weight information calculated by the weight calculator 257.

The example of the construction material arrangement process illustrated in Fig. 14 is an example in which a construction material panel is arranged on a 2D target surface, but may also be applied to a case where a construction material panel is arranged on a 3D target surface. For example, in the construction material arrangement process illustrated in Fig. 14, 3D data regarding a target surface may be acquired in the process in step S110, an angle of a protruding corner and/or a recessed corner may be acquired by adding the process in step S140 in Fig. 12, and arrangement information regarding the number, dimensions, and arrangement of construction materials to be arranged on the target surface may be generated according to an arrangement rule on the basis of the 3D data regarding the target surface and the reference dimensions selected by the user in the process in step S150.

### (Fifth example of construction material arrangement process)

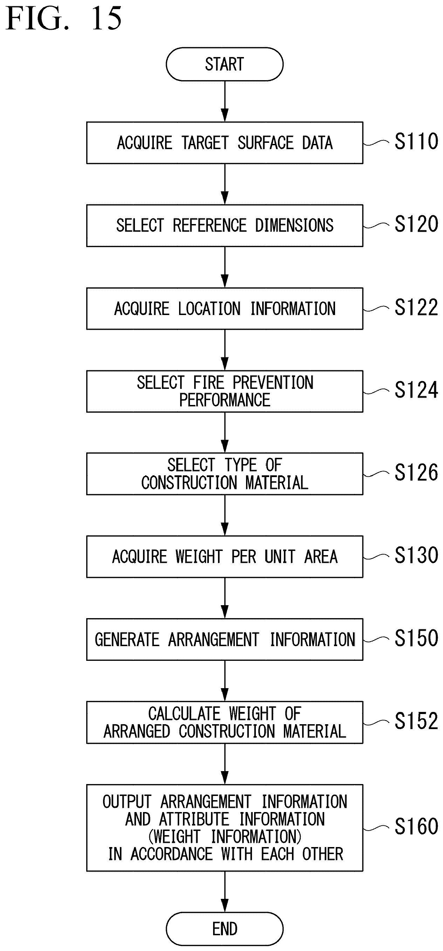

Fig. 15 is a flowchart illustrating a fifth example of the construction material arrangement process according to the present embodiment. The example of the construction material arrangement process illustrated in Fig. 15 is an example in which arrangement information is generated by selecting dimensions of a construction material panel (dimensions of the face panel module PM (reference face panel module)) to be arranged on a 2D target surface, a location condition, and fire prevention performance, and weight information of the construction material panel to be arranged is added as attribute information.

(Step S110) The target surface data acquirer 252 acquires 2D data regarding a target surface that is a target to which a construction material panel is to be attached from the target surface data storage 241. The flow proceeds to a process in step S120.

(Step S120) The receptioner 253 receives the selected type and reference dimensions of the construction material panel on the basis of a user's operation on the input 230. The reference dimensions are, for example, dimensions of the face panel module PM used as a reference (reference face panel module) described with reference to Fig. 8. The user may select the dimensions from among dimension options set in advance, and may designate any dimensions. The flow proceeds to a process in step S122.

(Step S122) The receptioner 253 receives selection for a location condition (a country, a prefecture, a state, a municipality, a specific area, or the like) of a building having the target surface on the basis of the user's operation on the input 230. The flow proceeds to a process in step S124.

(Step S124) The receptioner 253 receives selection for fire prevention performance (flame-retardant, quasi-nonflammable, nonflammable, or the like) of the building having the target surface on the basis of the user's operation on the input 230. The flow proceeds to a process in step S126.

(Step S126) The construction material selector 254 selects the type of construction material panel by using the location condition and the fire prevention performance selected on the basis of the user's operation. For example, the construction material selector 254 specifies fire prevention performance and strength-related references (laws, and the like) on the basis of the selected location condition (a country, a prefecture, a state, a municipality, a specific area, or the like), and allows the user to select, as options, construction material panels excluding the types not conforming to the fire prevention performance based on the references. The flow proceeds to a process in step S130.

(Step S130) The weight information acquirer 255 acquires weight information regarding the weight per unit area of the construction material panel selected by the construction material selector 254 by referring to the construction material panel information stored in the construction material information storage 242. The flow proceeds to a process in step S150.

(Step S150) The arrangement information generator 256 generates arrangement information regarding the number, dimensions, and arrangement of construction materials to be arranged on the target surface according to an arrangement rule on the basis of the 2D data regarding the target surface and the reference dimensions selected by the user (refer to Figs. 7 and 8). The flow proceeds to a process in step S152.

(Step S152) The weight calculator 257 calculates the weight of the construction material panel in a case where the construction material panel selected by the construction material selector 254 is to be attached to the target surface on the basis of the arrangement information generated by the arrangement information generator 256 and the weight information acquired by the weight information acquirer 255. The flow proceeds to a process in step S160.

(Step S160) The output 259 outputs the arrangement information generated by the arrangement information generator 256 in association with attribute information including the weight information calculated by the weight calculator 257.

The example of the construction material arrangement process illustrated in Fig. 15 is an example in which a construction material panel is arranged on a 2D target surface, but may also be applied to a case where a construction material panel is arranged on a 3D target surface. For example, in the construction material arrangement process illustrated in Fig. 15, 3D data regarding a target surface may be acquired in the process in step S110, an angle of a protruding corner and/or a recessed corner may be acquired by adding the process in step S140 in Fig. 12, and arrangement information regarding the number, dimensions, and arrangement of construction materials to be arranged on the target surface may be generated according to an arrangement rule on the basis of the 3D data regarding the target surface and the reference dimensions selected by the user in the process in step S150.

As described above, the construction material arrangement processing device 20 according to the present embodiment includes the target surface data acquirer 252 (an example of a first acquirer), the receptioner 253, the arrangement information generator 256, and the output 259. The target surface data acquirer 252 acquires target surface data from the target surface data storage 241 (an example of a storage) that stores three-dimensional data (3D data) including a plurality of target surfaces that are targets to which a construction material panel (an example of a construction material) is to be attached. The receptioner 253 receives information regarding dimensions designated as reference dimensions of a construction material panel to be attached to a target surface. The arrangement information generator 256 generates arrangement information regarding the number, dimensions, and arrangement of the construction material panel to be arranged on the plurality of target surfaces according to predetermined arrangement rules on the basis of the 3D data including the target surface data and the designated dimensions of the target surface. The output 259 outputs the arrangement information generated by the arrangement information generator 256. The arrangement information generator 256 arranges a specific construction material (accessory) that is attached over a first target surface and a second target surface out of the plurality of target surfaces and has a specific shape and dimensions at a protruding corner and/or a recessed corner between the first target surface and the second target surface.

Consequently, the construction material arrangement processing device 20 can automatically allocate a construction material panel not only to a two-dimensional target surface but also to a protruding corner and/or a recessed corner over a plurality of three-dimensional target surfaces. When the construction material arrangement processing device 20 is used, it is possible to simulate the design of construction material arrangement (aesthetic appearance, strength design, or the like) over the entire outer wall of a building, and thus a design office or a client can more easily compare and examine a plurality of construction material arrangement designs.

For example, the arrangement information generator 256 determines dimensions of the specific construction material (accessory) on the basis of the dimensions received by the receptioner 253, the dimension of the first target surface, and the dimension of the second target surface, and determines the shape of the specific construction material on the basis of an angle of the protruding corner and/or the recessed corner between the first target surface and the second target surface.

Consequently, the construction material arrangement processing device 20 can arrange a construction material panel serving as an accessory that is integrated by being folded according to an angle of a protruding corner and/or a recessed corner at the protruding corner and/or the recessed corner where the first target surface meets the second target surface.

The receptioner 253 may receive information regarding any dimension designated as reference dimensions of a construction material panel to be attached to a target surface. Consequently, the construction material arrangement processing device 20 can select dimensions of a construction material panel to be attached to a target surface from among preset dimensions and can also designate any dimension. Therefore, it is possible to increase the degree of freedom when the construction material panel is arranged on a wall surface of a building.

The construction material arrangement processing device 20 further includes the weight information acquirer 255 (an example of a second acquirer) and the weight calculator 257 (an example of a calculator). The weight information acquirer 255 acquires weight information regarding the weight per unit area of a construction material panel from the construction material information storage 242 (an example of a storage) storing the information regarding the construction material panel. The weight calculator 257 calculates the weight of the construction material panel to be attached to a target surface on the basis of the arrangement information generated by the arrangement information generator 256 and the weight information acquired by the weight information acquirer 255. The output 259 outputs the arrangement information generated by the arrangement information generator 256 in association with attribute information including at least information regarding the weight calculated by the weight calculator 257.

Consequently, the construction material arrangement processing device 20 can notify a processor who processes a construction material panel of the information regarding the weight of the construction material panel to be arranged in addition to the arrangement information for the construction material panel. Therefore, the processor in the subsequent procedure can generate a production drawing corresponding to an attachment structure in which the weight is taken into consideration when generating the production drawing for processing the construction material panel, and thus it is possible to increase work efficiency in the processor and manufacture the construction material panel to be processed to withstand the weight.

For example, the weight of the construction material panel differs depending on fire prevention performance of the construction material panel. As a result, the construction material arrangement processing device 20 can enable a processor to manufacture a product that has been processed to withstand the weight of the construction material panel satisfying the fire prevention performance.

The construction material arrangement processing device 20 further includes the construction material selector 254 that selects a construction material based on references (fire prevention performance, a strength, and the like) defined in each country from among a plurality of types of construction material panels. The arrangement information generator 256 generates the arrangement information with a construction material panel selected by the construction material selector 254 as a construction material panel to be attached to a target surface. The weight calculator 257 calculates the weight in a case where the construction material panel selected by the construction material selector 254 is to be attached to the target surface.

Consequently, the construction material arrangement processing device 20 can select a construction material panel conforming to references (fire prevention performance, a strength, and the like) in each country, and can also calculate the weight when the construction material panel is attached to the target surface.

The attribute information may include information regarding the color, the finish, or the cost of the construction material to be attached to the target surface.

Consequently, the construction material arrangement processing device 20 can also transmit the information regarding the color, the finish, or the cost of the construction material to be attached to the target surface to a processor in the subsequent procedure along with the arrangement information.

The receptioner 253 may further receive information regarding the designated color or finish of a construction material, or an orientation or an arrangement pattern when the construction material is attached to a target surface. The arrangement information generator 256 generates the arrangement information on the basis of the information received by the receptioner 253.

Consequently, the construction material arrangement processing device 20 can increase the degree of freedom of design when a construction material panel is attached to a target surface and can thus simulate various types of construction material panels in various types of arrangement patterns or orientations.

The construction material arrangement processing device 20 further includes the image generator 258 that generates an image in a state in which the construction material is attached to the target surface on the basis of the arrangement information. The output 259 outputs the image generated by the image generator 258 in association with the arrangement information.

Consequently, the construction material arrangement processing device 20 can check what kind of image the simulated construction material panel arrangement actually looks like with an image diagram or an image picture.

As mentioned above, an embodiment of the invention has been described in detail with reference to the drawings, but a specific configuration is not limited to the above configuration, and various design changes can be made within the scope without departing from the spirit of the invention.

For example, in the above-described embodiment, the case where the shape of a construction material panel to be attached to a target surface is rectangular or square has been described as an example, but the shape of the construction material panel is not limited thereto, and may be a triangular shape or a polygonal shape of a pentagonal shape or more, and may be various shapes such as a circular shape, a diamond shape, or a special shape. In the above-described embodiment, an example in which a construction material panel is a flat plate or the flat plate is mountain-folded or valley-folded and attached has been described, but the construction material panel is limited to the flat plate, and may have a three-dimensional shape including a curved surface, a protrusion part, a depression part, and the like.

Some or all of the functions of each of the 3D-CAD device 10, the construction material arrangement processing device 20, and the design and construction assistance device 30 in the above-described embodiment may be realized by a computer. In this case, the functions may be realized by recording a program for realizing the functions on a computer readable recording medium, reading the program recorded on the recording medium to a computer system, and executing the program. The "computer system" described here is a computer system built into each of the 3D-CAD device 10, the construction material arrangement processing device 20, and the design and construction assistance device 30, and includes an OS or hardware such as peripheral devices. The "computer readable recording medium" refers to a portable medium such as a flexible disk, a magnetooptical disc, a ROM, or a CD-ROM, or a storage device such as a hard disk built into a computer system. The "computer readable recording medium" may include a medium that dynamically stores the program for a short period of time, such as a communication wire when the program is transmitted via a network such as the Internet or a communication line such as a telephone line, and a medium that stores the program for a predetermined time, such as a volatile memory inside the computer system serving as a server or a client in that case. The program may be a program for realizing some of the functions described above, and may be a program that can realize the functions in combination with a program already recorded in the computer system.

Some or all of the 3D-CAD device 10, the construction material arrangement processing device 20, and the design and construction assistance device 30 may be implemented as integrated circuits such as a large scale integration (LSI). The constituents of each of the 3D-CAD device 10, the construction material arrangement processing device 20, and the design and construction assistance device 30 may be individually implemented as processors, and some or all of the constituents may be integrated into a processor. A method of making an integrated circuit is not limited to an LSI, and may be realized by a dedicated circuit or a general-purpose processor. In a case where an integrated circuit technology that replaces an LSI appears with the advance of semiconductor technologies, an integrated circuit based on this technology may be used.

### [Reference Signs List]

- 1: Design and construction assistance system
- 10: 3D-CAD device
- 20: Construction material arrangement processing device
- 30: Design and construction assistance device
- 210: Communicator
- 220: Display
- 230: Input
- 240: Storage
- 241: Target surface data storage
- 242: Construction material information storage
- 243: Reference data storage
- 244: Arrangement rule storage
- 245: Arrangement information storage
- 250: Controller
- 251: Structure design data acquirer
- 252: Target surface data acquirer
- 253: Receptioner
- 254: Construction material selector
- 255: Weight information acquirer
- 256: Arrangement information generator
- 257: Weight calculator
- 258: Image generator
- 259: Output

## Claims

1. A construction material arrangement processing device comprising:
a first acquirer configured to acquire target surface data from a storage storing three-dimensional data including a plurality of target surfaces that are targets to which a construction material is to be attached;
a receptioner configured to receive information regarding dimensions designated as reference dimensions of the construction material to be attached to the target surfaces;
an arrangement information generator configured to generate arrangement information regarding the number, dimensions, and arrangement of the construction material to be arranged on the plurality of target surfaces according to predetermined arrangement rules on the basis of the three-dimensional data and the designated dimensions; and
an output configured to output the arrangement information generated by the arrangement information generator,
wherein the arrangement information generator generates the arrangement information in which a specific construction material that is attached over a first target surface and a second target surface out of the plurality of target surfaces and has a specific shape and dimensions is arranged at a protruding corner and/or a recessed corner between the first target surface and the second target surface.

2. The construction material arrangement processing device according to claim 1,
wherein the arrangement information generator determines dimensions of the specific construction material on the basis of the dimensions received by the receptioner, dimensions of the first target surface, and dimensions of the second target surface, and determines the shape of the specific construction material on the basis of an angle of the protruding corner and/or the recessed corner between the first target surface and the second target surface.

3. The construction material arrangement processing device according to claim 1 or 2,
wherein the receptioner receives information regarding any dimension designated as the reference dimension of the construction material to be attached to the target surfaces.

4. The construction material arrangement processing device according to any one of claims 1 to 3, the construction material arrangement processing device further comprising:
a second acquirer configured to acquire weight information regarding the weight of the construction material per unit area from a storage storing information regarding the construction material; and
a calculator configured to calculate the weight of the construction material to be attached to the target surfaces on the basis of the arrangement information generated by the arrangement information generator and the weight information,
wherein the output outputs the arrangement information generated by the arrangement information generator and attribute information including at least information regarding the weight calculated by the calculator in association with each other.

5. The construction material arrangement processing device according to claim 4,
wherein the weight of the construction material differs depending on a fire prevention performance of the construction material.

6. The construction material arrangement processing device according to any one of claim 4 or 5, the construction material arrangement processing device further comprising:
a construction material selector configured to select a construction material based on references defined in each country from among a plurality of types of the construction materials,
wherein the arrangement information generator generates the arrangement information with the construction material selected by the construction material selector as the construction material to be arranged on the target surfaces, and
wherein the calculator calculates the weight in a case where the construction material selected by the construction material selector is to be attached to the target surfaces.

7. The construction material arrangement processing device according to any one of claims 4 to 6,
wherein the attribute information includes information regarding the color, the finish, or the cost of the construction material to be attached to the target surfaces.

8. The construction material arrangement processing device according to any one of claims 1 to 7,
wherein the receptioner further receives information regarding a designated color or finish of the construction material, or an orientation or an arrangement pattern when the construction material is attached to the target surfaces, and
wherein the arrangement information generator generates the arrangement information on the basis of the information received by the receptioner.

9. The construction material arrangement processing device according to any one of claims 1 to 8, the construction material arrangement processing device further comprising:
an image generator configured to generate an image in a state in which the construction material is attached to the target surfaces on the basis of the arrangement information,
wherein the output outputs the image generated by the image generator in association with the arrangement information.

10. A construction material arrangement method in a construction material arrangement processing device, the construction material arrangement method comprising:
causing a first acquirer to acquire target surface data from a storage storing three-dimensional data including a plurality of target surfaces that are targets to which a construction material is to be attached;
causing a receptioner to receive information regarding dimensions designated as reference dimensions of the construction material to be attached to the target surfaces;
causing an arrangement information generator to generate arrangement information regarding the number, dimensions, and arrangement of the construction material to be arranged on the plurality of target surfaces according to predetermined arrangement rules on the basis of the three-dimensional data and the designated dimensions, and generate the arrangement information in which a specific construction material that is attached over a first target surface and a second target surface out of the plurality of target surfaces and has a specific shape and dimensions is arranged at a protruding corner and/or a recessed corner between the first target surface and the second target surface; and
causing an output to output the generated arrangement information.

11. A program causing a computer to execute:
acquiring target surface data from a storage storing three-dimensional data including a plurality of target surfaces that are targets to which a construction material is to be attached;
receiving information regarding dimensions designated as reference dimensions of the construction material to be attached to the target surfaces;
generating arrangement information regarding the number, dimensions, and arrangement of the construction material to be arranged on the plurality of target surfaces according to predetermined arrangement rules on the basis of the three-dimensional data and the designated dimensions, and generating the arrangement information in which a specific construction material that is attached over a first target surface and a second target surface out of the plurality of target surfaces and has a specific shape and dimensions is arranged at a protruding corner and/or a recessed corner between the first target surface and the second target surface; and
outputting the generated arrangement information.
